(19) Europäisches Patentamt
European Patent Office
Office européen des brevets

(11) **EP 3 026 352 A1**

(12) **EUROPÄISCHE PATENTANMELDUNG**

(43) Veröffentlichungstag:
**01.06.2016 Patentblatt 2016/22**

(51) Int Cl.:
*F24D 19/10* (2006.01)    *F04D 15/00* (2006.01)

(21) Anmeldenummer: **15194209.1**

(22) Anmeldetag: **12.11.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **14.11.2014 DE 102014016791**

(71) Anmelder: **PAW GmbH & Co. KG**
**31789 Hameln (DE)**

(72) Erfinder:
 • **Pommerening, Marc**
  **31789 Hameln (DE)**

 • **Vehmeier, Jörg**
  **32791 Lage (DE)**
 • **Böhning, Holger**
  **31860 Emmertal (DE)**
 • **Pradler, Sascha**
  **31787 Hameln (DE)**
 • **Möller, Lars**
  **33689 Bielefeld (DE)**
 • **Pärisch, Peter**
  **31785 Hameln (DE)**

(74) Vertreter: **Jabbusch, Matthias**
**Jabbusch Siekmann & Wasiljeff**
**Patentanwälte**
**Roscherstrasse 12**
**30161 Hannover (DE)**

(54) **VERFAHREN ZUR HYDRAULISCHEN REGELUNG MEHRERER HEIZKREISLÄUFE AM VERTEILERBALKEN**

(57)    Verfahren zur hydraulischen Regelung mehrerer Heizkreisläufe am Verteilerbalken, wobei die Pumpen gemäß einer H-v oder H-c Regelkennlinie angesteuert werden, dadurch gekennzeichnet, dass eine davon unabhängige Durchflussgrenze zugewiesen werden kann, ab der die Pumpe abgeregelt wird. Weiterhin wird die Regelkennlinie abhängig von der Mischerstellung und vom Druckverlust im Zulaufkreislauf zu größeren Förderhöhen verschoben, um Versorgungssicherheit zu gewährleisten und gegenseitige Beeinflussung auszuregeln.

Figur 1

**EP 3 026 352 A1**

**Beschreibung**

Die Erfindung betrifft ein Verfahren zur hydraulischen Regelung mehrerer, parallel geschalteter Fluidkreisläufe mit jeweils einer drehzahlvariablen Pumpe.

Die Erfindung betrifft ein Verfahren gemäß dem Oberbegriff des Anspruchs 1 mit den Merkmalen der Ansprüche.

Ohne Beschränkung der Allgemeinheit sei im Folgenden der Fluidkreislauf ein Zweistrang-Heizungskreislauf.

In der Heizungstechnik hat man es üblicherweise mit unterschiedlichen Regelungen zu tun, die bezüglich Software und Hardware getrennt sind, sich jedoch gegenseitig beeinflussen können: die Kesselregelung, die Heizkörperregelung und die hydraulische Regelung.

In der Regel schaltet die Kesselregelung die Spannungsversorgung der Heizkreispumpen an und ab. Zum Beispiel im Sommermodus oder bei Trinkwarmwasserbereitung mit Vorrang wird die Heizkreispumpe abgeschaltet. Am Kessel ist üblicherweise ein Außentemperatursensor angeschlossen und eine Heizkennlinie (funktionaler Zusammenhang zwischen Außentemperatur und Kessel- bzw. Vorlauftemperatur) implementiert, die den Modulationsgrad des Brenners bzw. die Takthäufigkeit von nichtmodulierenden Brennern bestimmt (witterungsgeführte Regelung). Sollen unabhängige Heizkreisläufe witterungsgeführt mit unterschiedlichen Heizkennlinien bedient werden, so sind üblicherweise Mischer zur Rücklaufbeimischung in den Heizkreisläufen eingesetzt, die den Rücklauf dem Vorlauf beimischen und von der Kesselregelung geregelt werden.

Die Heizkörperregelung erfolgt in der Regel so, dass zunächst die Raumtemperatur gemessen und mit einer eingestellten Solltemperatur verglichen wird und anschließend der Volumenstrom durch den Heizkörper durch Variation des Strömungswiderstands beeinflusst wird.

Für den hydraulischen Abgleich mehrerer Heizungskreisläufe gibt es in der Praxis zwei wesentliche Technologien, mit denen der Differenzdruck zwischen den jeweiligen Vor- und Rückläufen geregelt wird. Wie bereits erwähnt ist die hydraulische Regelung unabhängig von der Kesselsteuerung und der Heizkörperregelung. Unabhängig heißt, dass keinerlei Informationen, wie zum Beispiel Messwerte, Sollwerte etc., ausgetauscht werden.

Erstens sind es Drosselorgane wie Differenzdruckregler, an denen ein Soll-Differenzdruck eingestellt wird. Der Differenzdruckregler ist mit Vor- und Rücklauf verbunden und verändert abhängig von Soll-/Ist-Differenz einen Ventilsitz, also seinen Strömungsquerschnitt, so dass sich zwischen Vorlauf und Rücklauf ein konstanter Differenzdruck einstellt. Dieser passt sich dann dynamisch an den Volumenstrom an. Differenzdruckregler haben den Nachteil, dass dem Wasser beim Pumpen zugeführte Strömungsenergie ungenutzt verwirbelt wird. Am Verteilerbalken mit mehreren Heizkreisläufen kann mit einer zentralen Pumpe im Zulauf und mehreren Differenzdruckreglern gearbeitet werden, solange kein witterungsgeführter Mischer in den Heizkreisläufen vorhanden ist. Das ist möglich, wenn der Heizkessel witterungsgeführt moduliert und jeder Heizkreis die gleiche Heizkennlinie verwenden kann. Bei gemischten Systemen mit Radiator- und Fußbodenheizkreis sind witterungsgeführte Mischer in den Heizkreisläufen vorhanden und es ist dann in jedem Heizkreislauf eine Pumpe und ein Differenzdruckregler zu installieren, was teuer ist. Denkbar wäre es, wie in EP 2 775 370 A2 erwähnt, den Differenzdruck mit einem Regler zu messen und die drehzahlsteuerbare Pumpe so zu regeln, dass ein eingestellter Differenzdruck oder ein funktionaler Zusammenhang zwischen Differenzdruck und Volumenstrom erzeugt wird. Es ist jedoch in der Praxis zudem schwierig, die richtigen Sollwerte für den Differenzdruck jedes Heizkreislaufs festzulegen.

Zweitens sind es selbstregelnde Pumpen die neben einer Konstantdrehzahlkennlinie (n-c) meist eine Proportionaldruckkennlinie (H-v) oder eine Konstantdruckkennlinie (H-c) implementiert haben. Bei der Konstantdruckkennlinie wird zu jeder Stellung der Heizkörperventile, also für jede Anlagenkennlinie, die Pumpendrehzahl n so eingestellt, dass sich die gleiche Förderhöhe H bezogen auf die Anschlussstutzen der Pumpe ergibt. Bei der Proportionaldruckkennlinie steigt die Soll-Förderhöhe H(Q) proportional zum Volumenstrom Q an bzw. fällt nach links ab. Gebräuchlich ist ein linearer Zusammenhang, es sind jedoch auch andere funktionale Zusammenhänge zwischen Volumenstrom Q und Soll-Förderhöhe H vorgeschlagen worden (zum Beispiel eine Wurzelfunktion in EP 0 726 396 B1 oder gar eine Durchfluss konstant Regelung DE 2946 049 A1). Eine Veränderung der Anlagenkennlinie wird immer anhand einer Veränderung des Volumenstroms (i. F. auch Durchfluss genannt) detektiert, die entweder direkt mit einem Durchflusssensor gemessen oder rechnerisch aus den elektrischen Betriebsgrößen des Motors unter Zuhilfenahme eines implementierten Pumpenkennfelds berechnet wird (EP 0 150 068 A3 oder DE 2946 049 A1). Die selbstregelnden Pumpen haben gegenüber den Differenzdruckreglern den Vorteil, dass nur so viel elektrische Energie aufgewendet wird, wie zum Betrieb des Heizkreislaufs notwendig ist.

Die Regelkennlinie der Pumpen kann zum Beispiel fest vorgegeben werden. Dazu sind im Parameterraum des Pumpenkennfelds (Durchfluss Q, Förderhöhe H und Drehzahl n) für einen linearen Zusammenhang zwei Stützpunkte zu definieren. Der rechte Stützpunkt wird zum Beispiel durch Eingabe eines maximalen Durchfluss Qmax bei einer im Algorithmus hinterlegten Drehzahl nmax vorgegeben und die zugehörige maximale Förderhöhe Hmax wird anhand des Pumpenkennfelds berechnet (EP 0 726 396 B1). Alternativ ist die Vorgabe einer maximalen Förderhöhe Hmax bei einer im Programm hinterlegten maximalen Drehzahl nmax gebräuchlich, woraus der zugehörige maximale Durchfluss Qmax ermittelbar ist (EP 0 150 068 A3). Der Vollständigkeit halber wird angemerkt, obwohl dies dem Erfinder bislang unbekannt ist, dass die Vorgabe von Qmax und Hmax denkbar ist und nmax aus dem Pumpenkennfeld abgeleitet wird. Der zweite Stützpunkt auf der Ordinate (ohne Durchfluss) ergibt sich durch Festlegung einer Mindest-Drehzahl nmin oder einer Mindest-Förderhöhe Hmin, die zum Beispiel mit einem Faktor aus Hmax abgeleitet werden kann. In der Praxis wird für Hmin häufig 0,5·Hmax verwendet.

Seit vielen Jahren bekannt sind weiterhin Methoden, die maximale Höhe bzw. die Regelkennlinie während des Betriebs anzupassen.

In EP 0 726 396 B1 wird beschrieben, dass die berechnete, maximale Förderhöhe Hmax abgesenkt wird, wenn der eingestellte maximale Durchfluss Qmax bereits bei niedriger Drehzahl als nmax erreicht wird. Das heißt eine flachere Anlagenkennlinie schneidet die senkrechte Qmax-Grenze bei niedrigeren Förderhöhen und der rechte Stützpunkt wird abgesenkt, hier auf den Mittelwert von altem und neuem Wert, was letzten Endes die ganze Regelkennlinie reduziert. Die Regelkennlinie ist somit von Qmax abhängig.

Ähnlich geht DE 195 25 887 C2 vor. Hierin wird im Algorithmus lediglich die maximale Drehzahl nmax vorgegeben und es werden die sich einstellenden Betriebspunkte hinsichtlich Durchfluss und Förderhöhe ausgewertet. Der rechte Stützpunkt der Regelkennlinie wird sukzessive durch Betriebspunkte ersetzt, welche zu einer flacheren Anlagenkennlinie auf der nmax-Kurve gehören, also zu einer kleineren Förderhöhe Hmax und einem größeren Durchfluss Qmax gehören. In der Patentschrift ist überdies beschrieben, dass die Betriebspunkte nicht zwingend auf der nmax-Kennlinie liegen müssen, insbesondere dann, wenn mit kleinerer Drehzahl begonnen wird, um den Adaptionsprozess zu beschleunigen. Die sich einstellenden Betriebspunkte bei einer anderen Drehzahl werden auf die nmax-Kennlinie hochgerechnet. Das heißt, die aktuelle Anlagenkennlinie wird rechnerisch mit der nmax-Kennlinie des hinterlegten Pumpenkennfelds geschnitten, so dass mit jeder beliebigen Regelkennlinie gestartet werden kann. Weiterhin wird eine saisonale Adaption beschrieben, indem täglich drei Betriebspunkte aufgezeichnet werden und deren Häufigkeitsverteilung bezüglich des maximalen Durchflusses ausgewertet wird. Wenn alle Betriebspunkte eines Jahres beispielsweise unter 70 % des maximalen Durchflusses kann die Regelkennlinie weiter abgesenkt werden. Erreichen etwa 10% der Betriebspunkte ungefähr Qmax, so sollte die Regelkennlinie angehoben werden.

EP 1 323 986 B1 beschreibt auch Adaptionsversuche, bei denen gezielt die Drehzahl reduziert bzw. erhöht wird, um eine Unter- bzw. Überversorgung des Heizkreislaufs und damit ein Öffnen bzw. Schließen der Thermostatventile zu erzwingen. Die sich dann einstellende flache bzw. steile Anlagenkennlinie wird verwendet, um die Regelkennlinie auf einen bestimmten Prozentsatz dazwischen festzulegen. Diese Adaption wird durchgeführt um mittel-(Tag/Nacht) und langfristige (Sommer/Winter) Anlagenänderungen zu detektieren und hat eine Dauer von etwa 1 bis 30 min. Kurzfristige Änderungen werden dann auf der Regelkennlinie ausgeregelt und bei Erreichen eines bestimmten Grenzwerts wird die Steigung der Regelkennlinie angepasst. Die Regelkennlinie ist hier ähnlich geformt wie die Anlagenkennlinie, das heißt sie geht durch den Ursprung im H-Q-Diagramm und ist linear bzw. parabelförmig. Weiterhin wird die Detektion einer Rückschlagklappe beschrieben und eine Anhebung der Regelkennlinie durchgeführt, so dass sie nicht durch den Ursprung geht.

In EP 1 323 984 B1 wird die Förderhöhe oder die Fördermenge zeitlich analysiert, um den Wärmebedarf der Heizungsanlage beeinflussende typischen Ereignisse (Fenster öffnen, Thermostatkopf öffnen/schließen, Solarerträge, Tag/Nachtabsenkung etc.) zu identifizieren. Die Drehzahl wird dann abhängig vom Ereignis angepasst und nicht zwingend entlang der Regelkurve. Dabei geht es nicht um hydraulische Ereignisse am Verteilerbalken, die lediglich die Druckverluste und nicht den Wärmebedarf beeinflussen würden, sondern um Ereignisse, die die Stellung der Thermostatventile beeinflussen.

Die selbstregelnden Pumpen haben den Nachteil, dass eine Übertragung der Förderhöhe H, die auf die Anschlussstutzen der Pumpe bezogen ist, auf den Differenzdruck (die eigentliche Regelgröße) zwischen Vor- und Rücklauf nicht so einfach ist. Für den Einzelheizkreis ohne Mischer kann das sehr gut funktionieren. Hier gibt es einen ziemlich festen Zusammenhang zwischen Förderhöhe und Differenzdruck. Ein witterungsgeführter Mischer sowie weitere am Verteilerbalken angeschlossene Heizkreisläufe mit Pumpen führen jedoch zu variablen Abweichungen zwischen Förderhöhe und Differenzdruck. Diese Effekte, in der Regelungstechnik Störgrößen genannt, werden durch die Pumpenregelung nicht ausgeregelt und teilweise sogar noch verstärkt. So führt eine Erhöhung des Druckverlusts einer anderen Komponente als der Thermostatventile, zum Beispiel des Mischers, zu einer Förderhöhenabnahme der Pumpe durch Drehzahlreduktion.

Die Störgrößen beeinflussen unter Umständen die Versorgungssicherheit einzelner am Verteiler angeschlossener Heizkreisläufe. Dem wird in der Praxis mit einer unnötigen Erhöhung der Regelkennlinie der Pumpe und/oder mit einer Anhebung der Heizkennlinie begegnet, was zum Beispiel den Gasverbrauch erhöht. Um das zu verhindern, sind die oben beschriebenen Verfahren zur automatischen Anpassung der Regelkennlinie nicht geeignet.

In EP 2 775 370 A2 wird eine Vorrichtung beschrieben, die zum Ziel hat, den hydraulischen Abgleich bzw. eine bessere Verteilung der Heizleistung zu ermöglichen. Sie besteht aus mehreren parallel geschalteten Fluidkreisläufen, insbesondere Heizkreisläufen an einem Verteilerbalken mit oder ohne witterungeführte Rücklaufbeimischung, mit jeweils einer drehzahlvariablen Pumpe, jeweils einem Durchflusssensor, jeweils einem Vor- und Rücklauftemperatursensor, mit einem gemeinsamen Vorlauftemperatursensor des Verteilers und mindestens einem Regler. Die Aufgabenstellung ist die gleiche wie in dieser Verfahrensanmeldung, jedoch finden sich dort wenig, auch für den Fachmann unkonkrete Hinweise auf das anzuwendende Verfahren.

Das erfindungsgemäße Verfahren hat das Ziel die vorgenannten Nachteile des Stands der Technik zu vermeiden und gegenseitige Beeinflussung mehrerer Heizkreisläufe untereinander sowie die Beeinflussung durch Veränderung der eigenen Mischerstellung zu korrigieren. Es ergeben sich Vorteile bei der Versorgungssicherheit der einzelnen Heizkreisläufe und der Energieeffizienz. Mit den verwendeten Sensoren kann zudem die gelieferte Wärmemenge in jeden Heizkreis gemessen werden.

Dies wird mit einem Regelungsverfahren gemäß dem Oberbegriff und den kennzeichnenden Merkmalen des Anspruchs 1 ff. gewährleistet.

Gemäß dem Stand der Technik kann man ein Verfahren zur hydraulischen Regelung von mehreren parallel geschalteten Fluidkreisläufen, insbesondere Heizkreisläufen an einem Verteilerbalken mit oder ohne witterungeführte Rücklaufbeimischung, mit jeweils einer drehzahlvariablen Pumpe, jeweils einem Durchflusssensor, mindestens einem Regler, wobei für jeden Fluidkreislauf

- zu jedem Betriebspunkt die Förderhöhe aus gemessenem Durchfluss, eingestellter Drehzahl und Pumpenkennfeld berechnet wird, (z. B. EP 0 150 068 A3)
- die Drehzahl so eingestellt wird, dass die resultierende Förderhöhe auf einer implementierten Regelkennlinie, insbesondere Proportionaldruck- oder Konstantdruckkennlinie, liegt, (z. B. EP 0 150 068 A3)
- wobei der rechte Stützpunkt (Qmax, Hmax, nmax) im Regler eingegeben werden kann oder ihn der Regler rechnerisch durch Schnitt der aktuellen Anlagenkennlinie mit der Maximaldrehzahlkurve der Pumpe während des Betriebs adaptiert wird, indem jeweils die flachste Anlagenkennlinie mit zugehörigem Wertetripel (Qmax, Hmax, nmax) gewählt wird, (DE 195 25 887 C2)

als bekannt oder naheliegend voraussetzen. Das gesamte Pumpenkennfeld kann hierbei um den Öffnungsdruck der Rückschlagklappe(n) nach unten korrigiert werden. Dies ist für den Antragssteller besonders einfach, da die Rückschlagklappe zu den integrierten Komponenten der Armaturengruppe gehört.

Erfindungsgemäß ist vorgesehen, dass ein Volumenstromgrenzwert QAP kleiner als Qmax und unabhängig von der Regelkennlinie vorgegeben werden kann und dass die Pumpendrehzahl so reduziert wird, dass der Volumenstromgrenzwert auch bei sehr flacher Anlagenkennlinie nicht überschritten wird, sich also ein Betrieb mit konstantem Volumenstrom einstellt. Unabhängig von der Regelkennlinie bedeutet, dass QAP keinen Einfluss auf die Regelkennlinie ausübt. Es bietet sich an, als Grenzwert QAP den aus der Heizlastberechnung und der Heizkörperdimensionierung bekannten Volumenstrom bei Norm-Auslegungsbedingungen zu verwenden. Alternativ kann bei bekannter hydraulischer Unterdimensionierung des Kesselkreislaufs der Durchflussgrenzwert QAP noch niedriger gewählt werden, um gegenseitiges Wegsaugen des Volumenstroms der Heizkreisläufe untereinander zu unterbinden. Die aktuelle Anlagenkennlinie, spezifiziert durch aktuelle Förderhöhe und aktuellen Volumenstrom, wird mit der QAP-Senkrechten und der Regelkennlinie geschnitten und der Soll-Betriebspunkt mit kleinerer Soll-Förderhöhe und kleinerem Soll-Volumenstrom wird für die Drehzahlfestlegung verwendet. Die Soll-Drehzahl wird aus dem implementierten Pumpenkennfeld, entweder tabellarisch oder durch Näherungsfunktionen beschrieben, mit Soll-Förderhöhe und Soll-Volumenstrom ermittelt und eingestellt. Alternative Vorgehensweisen sind abgedeckt. Zum Beispiel wenn der Soll-Volumenstrom auf der H(Q) Regelkennlinie größer als QAP ist, dann wird der Soll-Betriebspunkt auf der QAP-Senkrechten berechnet o. Ä.

In einer vorteilhaften Ausgestaltung der Erfindung ist vorgesehen, dass in jedem Heizkreislauf die Vor- und Rücklauftemperatur sowie die gemeinsame Vorlauftemperatur in den Verteiler gemessen wird, dass für jeden Heizkreislauf mit Mischer das Mischungsverhältnis abhängig von dem jeweiligen Verhältnis der beiden Temperaturdifferenzen Heizkreis-Vorlauf $T_{VL,i}$ minus Heizkreis-Rücklauf $T_{RL,i}$ und Verteiler-Vorlauf $T_{VL,0}$ minus Heizkreis-Rücklauf $T_{RL,i}$ berechnet wird und durch Multiplikation mit dem jeweils gemessenen Heizkreis-Volumenstrom $Q_{i,m}$ der Zulauf-Volumenstrom in den jeweiligen Heizkreis $Q_i$, also der jeweilige Volumenstrom aus dem Verteilerbalken, berechnet wird.

$$Q_i = \left(\frac{T_{VL,i} - T_{RL,i}}{T_{VL,0} - T_{RL,i}}\right) \cdot Q_{i,m}$$

Für Heizkreisläufe ohne Mischer wird der gemessene Volumenstrom am Verteilerbalken gesaugt, daher ist keine Korrektur erforderlich.

$$Q_i = Q_{i,m}$$

Mit dieser Umrechnung ist es möglich, die für den jeweiligen Heizkreislauf eingestellte oder adaptierte Regelkennlinie mit einem zeitvariablen Offset zu höheren Soll-Förderhöhen zu verschieben. Dem liegt die Erkenntnis zugrunde, dass der integrierte Mischer je nach Stellung einen anderen Druckverlust verursacht. Der Offset wird folglich bei jedem Durchlauf des Algorithmus, zum Beispiel im Sekundentakt oder Minutentakt, neu berechnet. Obwohl Tageseffekte wie Tag- und Nachtbetrieb oder saisonale Abhängigkeit auch ausgeregelt werden, geht es in erster Linie darum, kontinuierlich die hydraulischen Störungen zu korrigieren.

Gemäß einer vorteilhaften Ausführung wird der Offset eines jeden Heizkreislaufs mit Mischer abhängig von der Mischerstellung und dem berechneten Zulauf-Volumenstrom in den jeweiligen Heizkreis, vom Verteiler kommend, berechnet, indem für den eingesetzten Mischer ein Offset-Volumenstrom-Mischungsverhältnis-Kennfeld implementiert ist und ausgewertet wird. Die Korrektur erfordert detaillierte Kenntnisse des eingesetzten Mischers und kann daher seitens des Antragstellers, als Hersteller industriell vorgefertigter Baugruppen, besonders gut durchgeführt werden. Beispielsweise kann der Mischer in Bypass-Stellung, also bei kompletter Rücklaufbeimischung, einen geringen Druckverlust aufweisen. Drosselt der Mischer den Bypass zunehmend erhöht sich der Druckverlust im Kreislauf und diese Erhöhung kann auf die Regelkennlinie addiert werden. Ohne Korrektur reagiert die Pumpe ihrer Kennlinie entsprechend auf eine Erhöhung der Steilheit der Anlagenkennlinie mit einer Reduktion der Drehzahl, obwohl sich die Stellung der Thermostatventile, also der Wärmebedarf, nicht geändert hat. Es resultieren eine leichte Unterversorgung und unnötiges Absinken der Raumtemperatur bis die Thermostatventile nachregeln. Wird jedoch der zusätzliche Druckverlust auf die Regelkennlinie addiert, wird die Drehzahl der Pumpe erhöht und der Volumenstrom sinkt weniger oder gar nicht.

Einer weiteren vorteilhaften Ausgestaltung der Erfindung liegt die Erkenntnis zugrunde, dass sich die am Verteilerbalken saugenden Heizkreisläufe gegenseitig beeinflussen können. Der Druckverlust im Zulauf-Kreislauf, zum Beispiel ein Kreislauf mit Heizkessel, wird von dem Gesamtvolumenstrom aller Heizkreisläufe beeinflusst. Dies führt wieder zu einem variablen Fehler, einer Störgröße, zwischen Förderhöhe der Pumpe und der Druckdifferenz zwischen Vorlauf und Rücklauf. Beansprucht ist also, dass der variable Offset auch diesen Effekt berücksichtigt. Dazu ist erstens der Zulauf-Volumenstrom in den Verteilerbalken $Q_0$ entweder zu messen oder als Summe der einzeln berechneten (mit Mischer) bzw. gemessenen (ohne Mischer) Volumenströme aus dem Verteilerbalken heraus $Q_i$ zu ermitteln.

$$Q_0 = \sum_{i=1}^{n} Q_i$$

Zweitens ist für jeden Heizkreislauf mit oder ohne Mischer ein Offset als Produkt von Rohrnetzwiderstand $c_0$ des Zulaufkreislaufs mit der Differenz zwischen dem Volumenstrom in den gesamten Verteilerbalken $Q_0$ und dem jeweils entnommenen Volumenstrom $Q_i$ oder mit der Differenz der jeweils quadrierten Volumenstromwerte zu errechnen.

$$Offset_i = c_0 \cdot \left(Q_0^2 - Q_i^2\right) \ oder \ c_0 \cdot \left(Q_0 - Q_i\right)$$

Beide Offsets, einmal die Korrektur des Mischungsverhältnisses und einmal die Korrektur der gemeinsamen Druckverluste im Zulaufkreislauf, können alternativ oder additiv verwendet werden.

Vorteilhafterweise ist der Rohrnetzwiderstand des Zulaufkreislaufs $c_0$ ein veränderbarer Parameter, so dass unterschiedlich hohe Druckverluste des Kessels oder andere anlagenseitige Komponenten berücksichtigt werden können.

In einer vorteilhaften Ausgestaltung der Erfindung wird der Parameter $c_0$ während des Betriebs einmalig oder regelmäßig adaptiert, indem so kurzzeitig, dass sich die Anlagenkennlinie nicht ändert, mindestens eine vom aktuellen Betriebspunkt verschiedene Drehzahl angesteuert wird und wieder zum alten Betriebspunkt zurückgekehrt wird und das Gleichungssystem des Rohrnetzes nach dem Rohrnetzwiderstand des Zulaufkreislaufs aufgelöst wird. Anders als in EP 1 323 986 B1 ist hier das Ziel, einen Teilwiderstand der Anlagenkennlinie so schnell zu adaptieren, dass sich die Anlagenkennlinie selbst nicht verändert. In EP 1 323 986 B1 wird das Ziel verfolgt, die Thermostatventile zum Verstellen zu bringen, so dass eine flache und eine steile Anlagenkennlinie adaptiert werden kann. Diese Methode kann mit einem Heizkreislauf durchgeführt werden oder mit allen zur gleichen Zeit. In folgender Gleichung stellen die Indices 1 und 2 die beiden Betriebspunkte auf einer Anlagenkennlinie dar. Der Rohrnetzwiderstand $c_{i,int}$ steht für interne Widerstände, die zur Baugruppe und dem Verteiler gehören und besonders gut dem Antragssteller bekannt sind.

$$c_0 = c_{i,int} \cdot \frac{Q_{i,1}^2 \cdot Q_{i,m,2}^2 - Q_{i,2}^2 \cdot Q_{i,m,1}^2}{Q_{0,2}^2 \cdot Q_{i,m,1}^2 - Q_{i,1}^2 \cdot Q_{i,1}^2} + \frac{H_{i,2} \cdot Q_{i,m,1}^2 - H_{i,1} \cdot Q_{i,1}^2}{Q_{0,2}^2 \cdot Q_{i,m,1}^2 - Q_{i,1}^2 \cdot Q_{i,1}^2}$$

Die Adaption muss regelmäßig durchgeführt werden, wenn im Zulaufkreislauf ein veränderlicher Rohrnetzwiderstand vorhanden ist, wie zum Beispiel ein Mischer.

Vorteilhafterweise verfügt jeder Heizkreislauf über einen eigenen Regler (Slave). Diese sind miteinander und mit dem Master-Regler vernetzt, um Messwerte und berechnete Werte auszutauschen, so dass jedem Slave vom Master ein Sollwert für die Pumpendrehzahl oder ein Offset zugewiesen werden kann. Dadurch wird eine Skalierbarkeit des Verteilerbalkens erreicht, da jeder Slave über die notwendige Ausstattung verfügt, die Pumpe anzusteuern, die Messwerte aufzunehmen und mit einem Daten-Bus oder drahtlos die Informationen mit dem Master auszutauschen. Das Widerstandsnetzwerk, welches die Rohrnetzwiderstände repräsentiert, wird im Master abhängig von den angeschlossenen Slaves aufgebaut und gelöst, so dass jedem Heizkreislauf die Sollwerte vom Master zugewiesen werden können.

Alternativ können die Korrekturen der Regelkennlinie auch in jedem Slave berechnet werden. In diesem Fall sind jedoch der gemessene oder berechnete Volumenstrom in den Verteilerbalken hinein, die Vorlauftemperatur in den Verteilerbalken hinein an alle Slaves zu übermitteln. Die Slaves berechnen ihren eigenen Sollwert für die Pumpendrehzahl selbst.

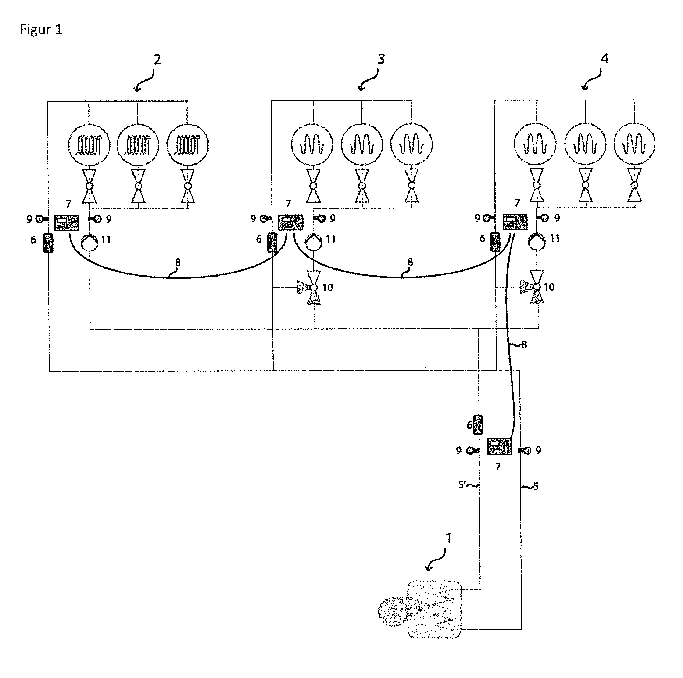

Figur 1 zeigt einen Verteilerbalken mit einem Zulaufkreislauf mit Heizkessel (1) und drei Heizkreisläufen zweimal mit Mischer (3, 4 als Fußbodenkreise) und einmal ohne (2) Mischer (10), mit jeweils einer geregelten Pumpe (11), einem Volumenstromsensor (6) und Temperatursensoren (9).Die Regler (7) sind untereinander per Busleitung (8) verbunden. Für den Fachmann ist naheliegend, dass auch eine drahtlose Vernetzung gemeint sein kann.

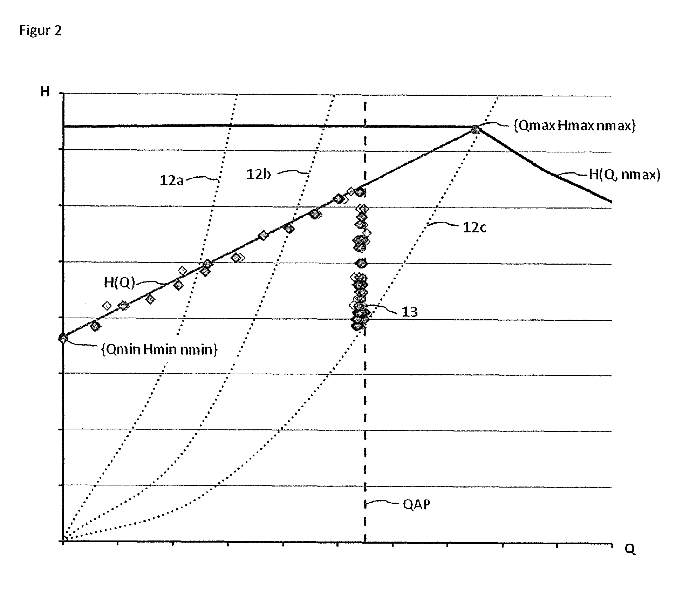

Figur 2 zeigt das erfindungsgemäße Verfahren nach Anspruch 1 im H-Q-Diagramm. Die Kurve H(Q, nmax) spezifiziert die Förderkennlinie der Pumpe bei beliebig festlegbarer Drehzahl nmax. Das kann die maximale Drehzahl der Pumpe sein, aber auch eine niedrigere Drehzahl ist denkbar. Die Regelkennlinie H(Q) sei über die Wertetripel {Qmax Hmax nmax} und {Qmin Hmin nmin} definiert. Der rechte Stützpunkt sei entweder im Regler vorgebbar oder wird im Betrieb adaptiert. Der linke Stützpunkt sei zum Beispiel durch eine Festlegung wie Hmin=0,5·Hmax definiert. Unabhängig von der Regelkennlinie ist ein Durchflussgrenzwert QAP eingetragen, der im Betrieb nicht überschritten werden soll. Weiterhin sind exemplarisch drei Anlagenkennlinien (12a, 12b, 12c) skizziert, zu denen ein Betriebspunkt auf der Regelkennlinie bzw. der QAP-Linie gehört. Die vielen skizzierten Rauten stehen für viele verschiedene Betriebspunkte (13) auf vielen Anlagenkennlinien (nicht alle dargestellt). Deutlich zu erkennen ist, dass die Pumpe elektronisch abgeregelt wird, wenn die Anlagenkennlinie so flach wird, dass QAP überschritten werden würde. Dadurch stellt sich bei flachen Anlagenkennlinien eine Volumenstrom-Konstant-Regelung ein. Dieses Verhalten unterscheidet sich deutlich vom Stand der Technik. Pumpen sind häufig überdimensioniert und/oder falsch eingestellt. QAP sorgt dafür, dass kein Heizkreis zu Lasten der anderen zu viel Volumenstrom absaugt.

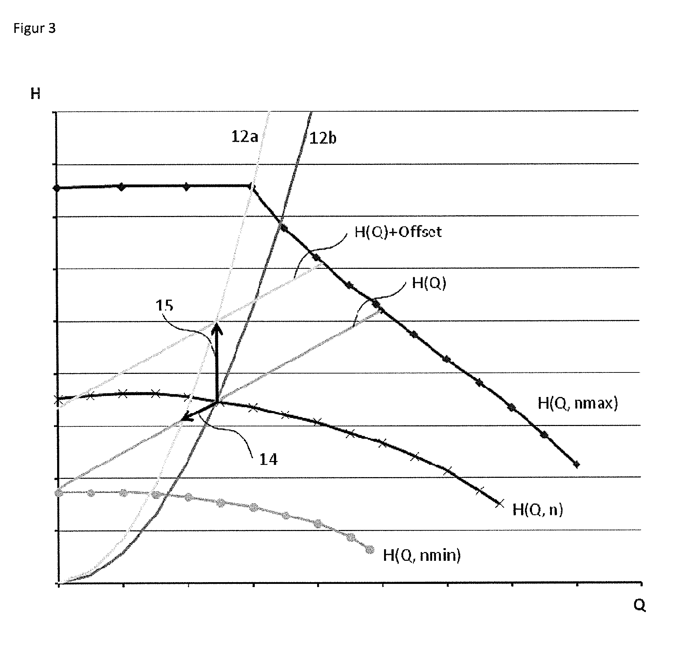

Figur 3 zeigt das erfindungsgemäße Verfahren nach Anspruch 3. Hierbei wird verdeutlicht, dass der dynamische Offset eine Volumenstromkonstanz bewirkt, wenn eine Druckverlusterhöhung eintritt, die nicht durch die Thermostatventile verursacht wurde. Die Pumpe würde eigentlich gemäß Zustandsänderung (14) die Drehzahl reduzieren, weil sie nicht unterscheiden kann, welches Bauteil die Erhöhung der Anlagenkennlinie verursacht. Der dynamische Offset hervorgerufen durch Veränderung der Mischerstellung oder durch gegenseitige Beeinflussung der Heizkreise untereinander führt jedoch zu einer Drehzahlerhöhung gemäß der erfindungsgemäßen Zustandsänderung (15). Dadurch wird vermieden, dass der Heizkreis unterversorgt wird und die Thermostatventile nachregeln müssen.

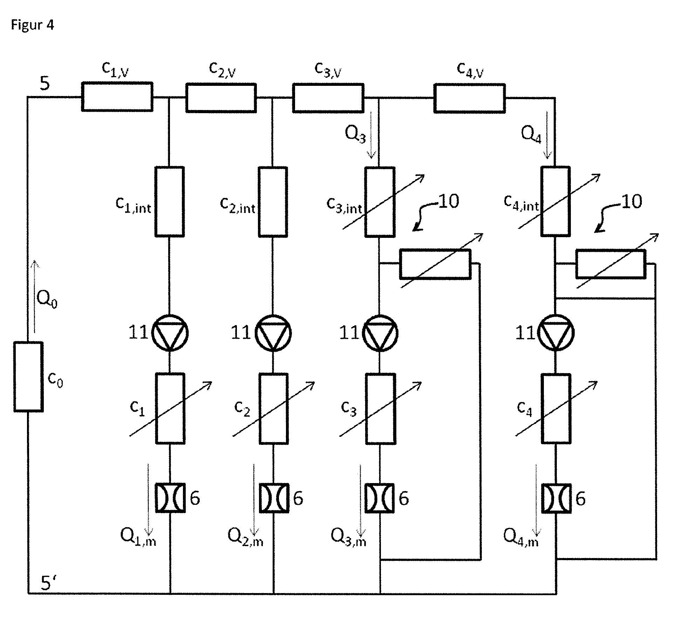

Figur 4 zeigt exemplarisch ein Widerstandsnetzwerk des Rohrnetzes gemäß Anspruch 8, das im Master aufgebaut ist und bei jedem Durchlauf des Algorithmus gelöst wird. Es zeigt hier den Zulaufkreislauf mit Ersatzwiderstand $c_0$ für Heizkessel und weitere Armaturen. Weiterhin sind vier Heizkreisläufe dargestellt, wobei die ersten beiden Heizkreisläufe ungemischt sind. Der dritte und vierte Heizkreislauf verfügen über eine Rücklaufbeimischung, wobei der vierte Heizkreislauf einen Bypass für Niedertemperatur-Flächenheizungen aufweist. Die Slaves melden sich am Master an und teilen ihm die notwendigen Informationen für die Konstruktion des Widerstandsnetzwerks mit, insbesondere Position am Verteiler oder Heizkreistyp (gemischt, ungemischt). Der Master baut das Widerstandsnetzwerk der hydraulischen Ersatzwiderstände auf. Es besteht aus den bekannten internen Widerständen der Heizkreismodule $c_{i,int}$ (hier mit i=1-4), den bekannten internen Widerständen des Verteilerbalkens $c_{i,v}$ (hier mit i=1-4) und dem Zulaufwiderstand $c_0$. Teilweise sind die Widerstände zeitvariabel, wie im Falle des Mischers (10). Die variablen Ersatzwiderstände $c_i$ mit i=1-4 repräsentieren den gesamten Heizkreislauf, also vor allem die Stellung der Thermostatventile und das Verteilnetz. Im Algorithmus können verschiedene Sollwerte für die Druckdifferenz über $c_i$ definiert werden, zum Beispiel Konstantdruck oder Proportionaldruck. Der Master löst das Gleichungssystem analytisch oder numerisch und weist jedem Slave den PWM-Sollwert oder den Offset zu.

**Patentansprüche**

1. Verfahren zur hydraulischen Regelung von mehreren, parallel geschalteten Fluidkreisläufen (2, 3, 4), insbesondere Heizkreisläufen an einem Verteilerbalken mit oder ohne witterungeführte Rücklaufbeimischung, mit jeweils einer drehzahlvariablen Pumpe (11), jeweils einem Durchflusssensor (6) und mindestens einem Regler (7), wobei für jeden Fluidkreislauf

   a. zu jedem Betriebspunkt (13) die Förderhöhe H aus gemessenem Durchfluss Q, eingestellter Drehzahl n und implementierten Pumpenkennfeld berechnet wird,
   b. die Drehzahl n so eingestellt wird, dass die resultierende Förderhöhe H auf einer implementierten Regelkennlinie H(Q), insbesondere Proportionaldruck- (H-v) oder Konstantdruckkennlinie (H-c), liegt und
   c. der rechte Stützpunkt {Qmax Hmax nmax} im Regler vorgegeben werden kann oder ihn der Regler rechnerisch durch Schnitt der aktuellen Anlagenkennlinie (12c) mit der Maximaldrehzahlkurve der Pumpe während des Betriebs adaptiert, indem jeweils die flachste Anlagenkennlinie mit zugehörigem Wertetripel {Qmax Hmax nmax} gewählt wird,
   **dadurch gekennzeichnet,**
   **dass** ein Volumenstromgrenzwert QAP kleiner als Qmax und unabhängig von der Regelkennlinie H(Q) vorgegeben wird und dass die Soll-Pumpendrehzahl anhand des Pumpenkennfelds so gewählt wird, dass sich für flache Anlagenkennlinien ein Betrieb mit konstantem Volumenstrom QAP einstellt, indem die Anlagenkennlinie mit der Regelkennlinie und der QAP-Senkrechten geschnitten wird und von beiden Soll-Betriebspunkten derjenige mit kleinerer Soll-Förderhöhe und kleinerem Soll-Volumenstrom für die Drehzahlberechnung verwendet wird.

2. Verfahren nach Anspruch 1, **dadurch gekennzeichnet, dass** die Temperaturen in jedem Heizkreisvorlauf- und -rücklauf sowie im Vorlauf des Verteilers (5') gemessen werden und dass für jeden Heizkreislauf (3, 4) mit Mischer (10)

   a. das Mischungsverhältnis abhängig von dem jeweiligen Verhältnis der beiden Temperaturdifferenzen Heizkreis-Vorlauf minus Heizkreis-Rücklauf und Verteiler-Vorlauf minus Heizkreis-Rücklauf berechnet wird
   b. und durch Multiplikation mit dem jeweils gemessenen Heizkreis-Volumenstrom der Zulauf-Volumenstrom in den jeweiligen Heizkreis, also der jeweilige Volumenstrom aus dem Verteilerbalken, berechnet wird.

3. Verfahren nach Anspruch 2, **dadurch gekennzeichnet, dass** die für den jeweiligen Fluidkreislauf eingestellte oder adaptierte Regelkennlinie mit einem zeitvariablen Offset zu höheren Soll-Förderhöhen verschoben wird.

4. Verfahren nach Anspruch 3, **dadurch gekennzeichnet, dass** der Offset eines jeden Heizkreislaufs mit Mischer abhängig von der Mischerstellung und dem berechneten Zulauf-Volumenstrom in den jeweiligen Heizkreis, vom Verteiler kommend, berechnet wird, indem für den eingesetzten Mischer ein Offset-Volumenstrom-Mischungsverhältnis-Kennfeld implementiert ist und ausgewertet wird.

5. Verfahren nach Anspruch 3 oder 4, **dadurch gekennzeichnet, dass**

   a. der Zulauf-Volumenstrom in den Verteilerbalken entweder gemessen oder als Summe der einzeln berechneten (mit Mischer) bzw. gemessenen (ohne Mischer) Volumenströme aus dem Verteilerbalken heraus ermittelt wird
   b. und dass für jeden Heizkreislauf mit oder ohne Mischer der Offset als Produkt von Rohrnetzwiderstand des Zulaufkreislaufs mit der Differenz zwischen dem Volumenstrom in den gesamten Verteilerbalken und dem jeweils entnommenen Volumenstrom oder mit der Differenz der jeweils quadrierten Volumenstromwerte errechnet wird.

6. Verfahren nach Anspruch 5, **dadurch gekennzeichnet, dass** der Rohrnetzwiderstand des Zulaufkreislaufs als veränderlicher Parameter im Regler eingebbar ist.

7. Verfahren nach Anspruch 6, **dadurch gekennzeichnet, dass** der Rohrnetzwiderstand des Zulaufkreislaufs einmalig oder regelmäßig adaptiert wird,

   a. indem so kurzzeitig, dass sich die Anlagenkennlinie nicht ändert, mindestens eine vom aktuellen Betriebspunkt verschiedene Drehzahl angesteuert wird und wieder zum alten Betriebspunkt zurückgekehrt wird
   b. und das Gleichungssystem des Rohrnetzes nach dem Rohrnetzwiderstand des Zulaufkreislaufs aufgelöst wird.

**8.** Verfahren nach einem der vorgenannten Ansprüche, wobei jeder Heizkreislauf über einen Regler (Slave) verfügt, diese miteinander und mit dem Master-Regler vernetzt sind, um Messwerte und berechnete Werte auszutauschen, **dadurch gekennzeichnet, dass** im Master auf Basis der aktuellen Informationen (Volumenströme, Temperaturen, Mischungsverhältnisse, Position) ein Rohrnetzplan der Ersatzwiderstände aufgebaut und eine Rohrnetzberechnung durchgeführt wird und jedem Slave vom Master ein Sollwert für die Pumpendrehzahl oder ein dynamischer Offset zugewiesen wird.

**9.** Verfahren nach einem der Ansprüche 1 bis 7, wobei jeder Heizkreislauf über einen Regler (Slave) verfügt, diese miteinander und mit dem Master-Regler vernetzt sind, um Messwerte und berechnete Werte auszutauschen, **dadurch gekennzeichnet, dass** jedem Slave vom Master der berechnete oder gemessene Volumenstrom in den Verteilerbalken hinein sowie die Vorlauftemperatur in den Verteilerbalken hinein übermittelt werden und die Slaves den Sollwert für die Pumpendrehzahl selbst berechnen.

**10.** Verfahren nach Anspruch 9, **dadurch gekennzeichnet, dass** jedem Slave nacheinander ein Zeitfenster zugewiesen wird, indem nur er regeln darf und die anderen Slaves keine Korrekturen durchführen.

Figur 1

Figur 2

Figur 3

Figur 4

Europäisches
Patentamt

European
Patent Office

Office européen
des brevets

**EUROPÄISCHER RECHERCHENBERICHT**

Nummer der Anmeldung

EP 15 19 4209

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | DE 195 25 887 C2 (GRUNDFOS AS [DK]) 27. Juni 2002 (2002-06-27) * das ganze Dokument * ----- | 1-10 | INV. F24D19/10 F04D15/00 |
| A,D | DE 29 46 049 A1 (HOECHST AG [DE]) 27. Mai 1981 (1981-05-27) * das ganze Dokument * ----- | 1-10 | |
| A,D | EP 0 726 396 B1 (GRUNDFOS AS [DK]) 23. September 1998 (1998-09-23) * Zusammenfassung; Abbildungen 1-2 * ----- | 1-10 | |
| A,D | EP 1 323 986 B1 (GRUNDFOS AS [DK]) 19. Januar 2011 (2011-01-19) * das ganze Dokument * * Spalte 2, Zeile 26 - Spalte 5, Zeile 33; Abbildungen 1,2 * ----- | 1-10 | |
| A,D | EP 1 323 984 B1 (GRUNDFOS AS [DK]) 19. April 2006 (2006-04-19) * das ganze Dokument * ----- | 1-10 | RECHERCHIERTE SACHGEBIETE (IPC) |
| A,D | EP 0 150 068 A2 (RHEINHUETTE VORM BECK & CO [DE]) 31. Juli 1985 (1985-07-31) * das ganze Dokument * ----- | 1-10 | F24D F04D |
| A,D | EP 2 775 370 A2 (PAW GMBH & CO KG [DE]) 10. September 2014 (2014-09-10) * das ganze Dokument * ----- | 1-10 | |
| A | WO 2008/025452 A1 (WILO AG [DE]; GROSSE WESTHOFF EDGAR [DE]; STRELOW GUENTER [DE]; KETTNE) 6. März 2008 (2008-03-06) * Zusammenfassung; Abbildungen 1-6 * ----- | 1-10 | |

Der vorliegende Recherchenbericht wurde für alle Patentansprüche erstellt

| Recherchenort | Abschlußdatum der Recherche | Prüfer |
|---|---|---|
| München | 21. April 2016 | García Moncayo, O |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

&  : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 15 19 4209

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-04-2016

| Im Recherchenbericht angeführtes Patentdokument | | Datum der Veröffentlichung | Mitglied(er) der Patentfamilie | | Datum der Veröffentlichung |
|---|---|---|---|---|---|
| DE 19525887 | C2 | 27-06-2002 | KEINE | | |
| DE 2946049 | A1 | 27-05-1981 | KEINE | | |
| EP 0726396 | B1 | 23-09-1998 | DE | 19504232 A1 | 22-08-1996 |
| | | | EP | 0726396 A1 | 14-08-1996 |
| EP 1323986 | B1 | 19-01-2011 | DE | 10163987 A1 | 10-07-2003 |
| | | | EP | 1323986 A1 | 02-07-2003 |
| EP 1323984 | B1 | 19-04-2006 | DE | 10163989 A1 | 10-07-2003 |
| | | | EP | 1323984 A1 | 02-07-2003 |
| | | | EP | 1640616 A2 | 29-03-2006 |
| EP 0150068 | A2 | 31-07-1985 | DE | 3402120 A1 | 25-07-1985 |
| | | | EP | 0150068 A2 | 31-07-1985 |
| EP 2775370 | A2 | 10-09-2014 | DE | 102013003933 A1 | 11-09-2014 |
| | | | EP | 2775370 A2 | 10-09-2014 |
| WO 2008025452 | A1 | 06-03-2008 | DE | 102006041346 A1 | 20-03-2008 |
| | | | EP | 2057420 A1 | 13-05-2009 |
| | | | WO | 2008025452 A1 | 06-03-2008 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2775370 A2
- EP 0726396 B1
- DE 2946049 A1
- EP 0150068 A3
- DE 19525887 C2
- EP 1323986 B1
- EP 1323984 B1